Europäisches Patentamt

European Patent Office

Office européen des brevets

(19)

(11) EP 0 509 515 B1

(12) EUROPEAN PATENT SPECIFICATION

(45) Date of publication and mention
of the grant of the patent:
**13.03.1996 Bulletin 1996/11**

(51) Int Cl.$^6$: **C08L 83/04**

(21) Application number: 92106640.3

(22) Date of filing: **16.04.1992**

(54) **Curable organopolysiloxane gel composition**

Härtbare Organopolysiloxan-Gelzusammensetzung

Gel d'organopolysiloxane durcissable

(84) Designated Contracting States:
**DE FR GB**

(30) Priority: **17.04.1991 JP 112499/91**

(43) Date of publication of application:
**21.10.1992 Bulletin 1992/43**

(73) Proprietor: **Dow Corning Toray Silicone
Company, Limited
Tokyo 103 (JP)**

(72) Inventors:
• **Enami, Hiroji
Ichihara-shi, Chiba Prefecture (JP)**
• **Tanaka, Osamu
Ichihara-shi, Chiba Prefecture (JP)**
• **Nakaya, Katsuyoshi
Ichihara-shi, Chiba Prefecture (JP)**

(74) Representative: **Spott, Gottfried, Dr.
Spott, Weinmiller & Partner
Sendlinger-Tor-Platz 11
D-80336 München (DE)**

(56) References cited:
**EP-A- 0 358 370        EP-A- 0 447 867**

• **WORLD PATENTS INDEX LATEST Derwent
Publications Ltd., London, GB; AN 87-260980**

**Description**

The present invention relates to a curable organopolysiloxane gel composition, and, more specifically, relates to a curable organopolysiloxane gel composition which cures to yield a gel whose gel properties undergo insignificant time-dependent variations.

Electronic instruments and devices are employed in a number of sectors, for example, in the automotive and household electrical products sectors. These electronic instruments and devices are typically equipped with vibration countermeasures since their service reliability is reduced by impact and vibration. The vibration countermeasures include, for example, the installation of vibration-proofing material on the electronic instrument for the purpose of absorbing external impact or vibration with the vibration-proofing material.

Cured organopolysiloxane rubbers and cured organopolysiloxane gels are employed as vibration-proofing materials in specialty fields where heat resistance and cold resistance are critical. In particular, organopolysiloxane gels have excellent vibration-proofing properties, and as a consequence are employed as sealants for electronic instruments and devices. Organopolysiloxane gels known in the art are: (i) the gel afforded by hydrosilylation-reaction-based crosslinking between a diorganopolysiloxane having terminal and pendant Si-bonded alkenyl groups and a diorganopolysiloxane having terminal and pendant silicon-bonded hydrogen as shown in Japanese Patent Application Laid Open [Kokai or Unexamined] Number 48-17847 [17,847/73]; (ii) the highly cold-resistant gel afforded by hydrosilylation-reaction-based crosslinking between a diorganopolysiloxane carrying silicon-bonded hydrogen at both molecular chain terminals and a branched diorganopolysiloxane carrying silicon-bonded alkenyl groups in the terminal position as shown in Japanese Patent Application Laid Open Number 58-7452 [7,452/83]; and (iii) the gel afforded by hydrosilylation-reaction-based crosslinking among diorganopolysiloxanes carrying SiH at both terminals, diorganopolysiloxanes carrying Si-bonded alkenyl groups at both terminals, and branched diorganopolysiloxanes carrying Si-bonded alkenyl groups in the terminal position as shown in Japanese Patent Application Laid Open Number 62-181357 [181,357/87].

However, the gel-based properties of these prior gels are quite vulnerable to time-dependent variations. For example, their hardness gradually changes when they are used as vibration-proofing material in electric or electronic devices employed in high-temperature service, and as a consequence their anti-vibration performance declines during long-term service. This problem can be ameliorated to some extent by bringing the Si-bonded alkenyl:SiH molar ratio in the curable organopolysiloxane gel composition into the range of 1:1; however, the resulting gel is still not entirely satisfactory and its applications are limited.

The present invention takes as its object the introduction of a curable organopolysiloxane gel composition which has an excellent pre-cure workability, which cures to give a strongly vibration-proofing gel, and in particular which affords a cured gel that undergoes inconsequential changes in gel properties such as hardness with the passage of time.

The aforesaid object is achieved by a curable organopolysiloxane gel composition comprising:

(A) 100 parts by weight of a diorganopolysiloxane which contains at least two silicon-bonded alkenyl groups in the molecule having a viscosity at 25°C of 50 to 100,000 mPa·s (centipoise) and containing no more than 0.5 percent by weight of tetrameric to eicosameric cyclic diorganosiloxanes;

(B) 1 to 50 parts by weight of an organopolysiloxane resin which contains silicon-bonded alkenyl groups and which is composed of $R^1_3SiO_{1/2}$ units where $R^1$ = alkyl, $R^1_2R^2SiO_{1/2}$ units where $R^1$ = alkyl and $R^2$ = alkenyl, and $SiO_2$ units wherein the ratio between the total number of moles of $R^1_3SiO_{1/2}$ units and $R^1_2R^2SiO_{1/2}$ units and the number of moles of $SiO_2$ units falls within the range of (0.6:1) to (4.0:1);

(C) an SiH-terminated diorganopolysiloxane with a viscosity of 1 to 1,000,000 mPa·s (centipoise) at 25°C wherein component (C) is added in a quantity which affords values of 1:0.2 to 1:5.0 for the ratio between the total number of moles of alkenyl groups in components (A) and (B) and the number of moles of silicon-bonded hydrogen atoms in component (C);

(D) a catalytic quantity of a hydrosilylation reaction catalyst; and

(E) zero to 30 parts by weight of an inorganic filler.

The curable organopolysiloxane gel composition according to the present invention is explained in greater detail below.

The diorganopolysiloxane comprising component (A) is the principal component of the curable organopolysiloxane gel composition according to the present invention. This diorganopolysiloxane should contain at least 2 silicon-bonded alkenyl groups in the molecule, should have a viscosity at 25°C in the range of 50 to 100,000 centipoise, and should contain no more than 0.5 weight % of tetrameric to eicosameric cyclic diorganosiloxane. Each molecule of component (A) must contain at least two Si-bonded alkenyl groups because the composition will not cure when fewer than two silicon-bonded alkenyl groups are present in each molecule. The silicon-bonded alkenyl groups in component (A) are exemplified by vinyl, allyl, and propenyl, and these groups may be present at the molecular chain terminals or pendant along the molecular chain. The non-alkenyl Si-bonded organic groups in component (A) are exemplified by alkyl groups such as methyl, ethyl, and propyl; aryl groups such as phenyl and tolyl; and aralkyl groups such as benzyl and phenethyl.

The skeleton of the diorganopolysiloxane comprising component (A) should be straight-chain, moderately branched, or a combination thereof. Component (A) should have a viscosity at 25°C in the range of 50 to 100,000 mPa·s (centipoise) and preferably in the range of 100 to 10,000 mPa·s (centipoise). When its viscosity falls below 50 (centipoise), the resulting curable organopolysiloxane gel composition is too fluid, and its handling becomes difficult. Moreover, the gel afforded by the curing of such a composition has reduced physical properties. On the other hand, when the viscosity exceeds 100,000 mPa·s (centipoise), the resulting curable organopolysiloxane gel composition suffers from impaired workability.

In addition, the diorganopolysiloxane comprising component (A) must contain no more than 0.5 weight % of tetrameric to eicosameric cyclic diorganosiloxane and preferably contains no more than 0.1 weight % of tetrameric to eicosameric cyclic diorganosiloxanes. When the content of tetrameric to eicosameric cyclic diorganosiloxanes exceeds 0.5 weight %, the gel properties of the cured gel will change with the passage of time.

Component (A) can be prepared by removing the tetrameric to eicosameric cyclic diorganosiloxanes from diorganopolysiloxanes prepared by conventional methods. Various techniques can be employed for removing cyclic diorganosiloxanes, and the specifically suitable technique will vary with the nature of the diorganopolysiloxane. For example, when the diorganopolysiloxane has a relatively low viscosity, the cyclic diorganosiloxanes can be removed by stripping a thin film of the diorganopolysiloxane at 180 to 300°C under a vacuum below 67 Pa (0.5 mm Hg). Alternatively, the cyclic diorganosiloxanes can be removed by combining the diorganopolysiloxane with an organic solvent which dissolves the low-molecular-weight diorganosiloxane but does not dissolve the high-molecular-weight diorganosiloxane. Examples of such organic solvents are methanol and ethanol. When the diorganopolysiloxane has a high viscosity, the diorganopolysiloxane is first dissolved in toluene, and the high-molecular-weight diorganosiloxane is precipitated by the addition of methanol or ethanol. The high-molecular-weight diorganosiloxane is separated from the solvent phase supernatant into which the low-molecular-weight diorganosiloxane has been extracted. Residual organic solvent in the high-molecular-weight diorganosiloxane can be removed by stripping.

The diorganopolysiloxane comprising component (A) may constitute any one of dimethylvinylsiloxy-terminated -terminated dimethylpolysiloxanes, dimethylvinylsiloxy-terminated dimethylsiloxane-methylphenylsiloxane copolymers, dimethylvinylsiloxy-terminated dimethylsiloxane-methylvinylsiloxane copolymers, dimethylsiloxane-methylvinylsiloxane copolymers carrying dimethylvinylsiloxy at one molecular chain terminal and trimethylsiloxy at the other terminal, and trimethylsiloxy-terminated dimethylsiloxane-methylvinylsiloxane copolymers.

Component (B) is the organopolysiloxane resin containing Si-bonded alkenyl groups and is the component which characterizes or distinguishes the curable organopolysiloxane gel composition according to the present invention. This organopolysiloxane resin is composed of the units $R^1_3SiO_{1/2}$, $R^1_2R^2SiO_{1/2}$, and $SiO_2$. The group $R^1$ is an alkyl group such as methyl, ethyl, and propyl, and methyl preferably comprises at least 95 mole % of all $R^1$ groups. $R^2$ is an alkenyl group such as vinyl, allyl, or hexenyl. In addition, the ratio of the total number of moles of $R^1_3SiO_{1/2}$ units plus $R^1_2R^2SiO_{1/2}$ units to the number of moles of $SiO_2$ units should fall within the range of 0.6:1 to 4.0:1. In order to be able to dissolve component (B) in component (A) prior to use, component (B) must have a molecular weight which makes possible solubilization in the diorganopolysiloxane comprising component (A).

Component (B) is added at 1 to 50 parts per 100 parts by weight of component (A). The vibration-proofing performance of the cured gel is compromised by the addition of less than one part by weight of component (B) per 100 parts of component (A). On the other hand, the cured product is no longer a gel when more than 50 parts by weight is added.

Component (C) in the curable organopolysiloxane gel composition of the present invention is a crosslinker. This component comprises an SiH-terminated diorganopolysiloxane. The silicon-bonded hydrogen atoms in component (C) should be present at both molecular chain terminals however, they may be present in part along the molecular chain as long as the vibration-proofing performance remains unimpaired. In addition to the silicon-bonded hydrogens, the silicon-bonded organic groups in component (C) are exemplified by alkyl groups such as methyl, ethyl, and propyl; aryl groups such as phenyl and tolyl; alkenyl groups such as vinyl and allyl; and aralkyl groups such as benzyl and phenethyl.

No specific restriction is placed on the structure of the diorganopolysiloxane comprising component (C), and it may be either straight chain or moderately branched or a combination thereof. Component (C) should have a viscosity at 25°C in the range of 1 to 1,000,000 mPa·s (centipoise). When the viscosity is less than 1 mPa·s (one centipoise), the volatility of component (C) is so high that its content in the curable organopolysiloxane gel composition will be unstable. On the other hand, a viscosity in excess of 1,000,000 mPa·s (centipoise) hinders production.

Component (C) must be added in a quantity which affords values of 1:0.2 to 1:5.0 and preferably of 1:0.4 to 1:1 for the ratio of the total number of moles of alkenyl groups in components (A) plus (B) to the number of moles of silicon-bonded hydrogen atoms in component (C). The cured product will not be a gel at less than 0.2 moles silicon-bonded hydrogen atoms in component (C) per 1 mole total alkenyl groups in components (A) plus (B). On the other hand, the cured gel will experience substantial time-dependent changes in its gel properties when a value of 5.0 is exceeded.

The hydrosilylation reaction catalyst component (D) in the curable organopolysiloxane gel composition of the present invention is a catalyst of the addition reaction between the alkenyl groups in components (A) and (B) and the silicon-bonded hydrogen atoms in component (C). Known hydrosilylation reaction catalysts can be used. The hydrosilylation reaction catalyst comprising component (D) is exemplified by (i) platinum catalysts such as chloroplatinic acid, platinum-olefin complexes, platinum-ketone complexes, platinum-vinylsiloxane complexes, platinum black, and platinum supported on a carrier such as silica or active carbon; (ii) palladium catalysts such as tetrakis(triphenylphosphine)palladium and mixtures of palladium black and triphenylphosphine; and (iii) rhodium catalysts. Platinum catalysts are preferred.

Component (D) should be added in a catalytic quantity. In specific terms, when component (D) is a platinum catalyst, it should be added at 0.01 to 1,000 parts by weight and preferably at 0.1 to 100 parts by weight as platinum metal in component (D) per 1,000,000 parts of the total quantity of components (A) plus (B) plus (C).

Component (E) in the curable organopolysiloxane gel composition of the present invention functions to impart strength to the cured gel. This component is exemplified by inorganic fillers such as precipitated silica, fumed silica, calcined silica, fumed titanium oxide, quartz powder, diatomaceous earth, asbestos, aluminosilicates, iron oxide, zinc oxide, and calcium carbonate. The particular inorganic filler can be employed without modification, or it can be employed after its surface has been treated with an organosilicon compound such as hexamethyldisilazane, trimethylchlorosilane, or an organopolysiloxane.

Component (E) should be added within the range of zero to 30 parts by weight and preferably 3 to 20 parts per 100 parts by weight of component (A). When thirty weight parts is exceeded, the composition according to the present invention will not yield a gel having a good vibration-proofing performance.

The curable organopolysiloxane gel composition according to the present invention has an excellent pre-cure workability, and affords a cured gel which has (i) a hardness of zero when measured using the JIS A hardness meter described in JIS K 6301, (ii) a penetration not exceeding 300 as measured by the consistency measurement method described in JIS K 2220, and (iii) a loss coefficient (tan delta) within the range of 0.1 to 2 at 25°C and shear frequency = 0.01 Hz to 10 Hz. This gel exhibits superior adherence to various types of substrates and has excellent vibration-proofing performance over a broad range of vibration frequencies and ambient temperatures. As a consequence, it is useful as a vibration-proofing material for various types of electronic instruments and devices, and as a potting or encapsulating material.

The present invention is explained in greater detail below through illustrative and reference examples. To measure the cyclic diorganosiloxane content in the diorganopolysiloxane, the cyclic diorganosiloxane in the diorganopolysiloxane was extracted with acetone and was measured by gas chromatography using n-undecane as an internal standard. The consistency was measured in accordance with the method described in JIS K 2220 using a 6.3 mm (one quarter-inch) cone. In order to measure the loss coefficient (tan delta), a circular cured gel plate was manufactured having a thickness of 5 - 6 mm and a diameter of 25 mm and this parameter was measured using a dynamic analyzer from Rheometrics Inc. The strength of the gel was measured using a number three dumbbell (thickness = 1 mm) according to the method described in JIS K 6301. Workability was evaluated during the mixing of components (A) through (E) and subsequent vacuum de-aeration. The adhesiveness was evaluated by curing the curable organopolysiloxane gel composition on an aluminum plate and evaluating the adhesion status. The viscosity is the value at 25°C and is reported in (cP(centipoise)). (mPa·s)

Reference Example 1

A dimethylvinylsiloxy-terminated dimethylpolysiloxane with a viscosity = 2,000 mPa·s (cP) and a tetrameric to eicosameric cyclic dimethylsiloxane content = 4 weight Z was prepared by an equilibration reaction and stripped as the thin film at 180°C/≤67 Pa (0.5 mmHg). The resulting dimethylpolysiloxane had a viscosity of 2,300 mPa·s (cp) and a tetrameric to eicosameric cyclic dimethylsiloxane content of 0.1 weight %.

Reference Example 2

A dimethylvinylsiloxy-terminated dimethylpolysiloxane with a viscosity = 10,040 mPa·s (cP) and a tetrameric to eicosameric cyclic dimethylsiloxane content = 4 weight % was prepared by an equilibration reaction and stripped as the thin film at 180°C/≤67 Pa (0.5 mmHg). The resulting dimethylpolysiloxane had a viscosity of 11,100 mPa·s (cP) and a tetrameric to eicosameric cyclic dimethylsiloxane content of 0.07 weight %.

Example 1

The following were mixed to provide a curable organopolysiloxane gel composition according to the present invention: 88.2 parts by weight of the dimethylpolysiloxane from Reference Example 1; 11.8 parts by weight of the dimethylpolysiloxane from Reference Example 2; 15.3 parts by weight of an organopolysiloxane resin composed of 39.7 mole % $(CH_3)_3SiO_{1/2}$ units, 4.8 mole % $(CH_3)_2(CH_2=CH)SiO_{1/2}$ units, and 55.5 mole % $SiO_2$ units; 7.6 parts by weight of a dimethylhydrogensiloxy-terminated dimethylpolysiloxane with a viscosity = 16 mPa·s (cP) a chloroplatinic acid-divinyltetramethyldisiloxane complex sufficient to provide 5 ppm platinum metal based on the total quantity of dimethylpolysiloxane; and 8.2 parts by weight of dry-method silica with a specific surface = 200 m$^2$/g. The ratio of the number of moles of alkenyl groups to the number of moles of silicon-bonded hydrogen for this composition was 1:0.59. The composition was de-aerated in vacuo and heated at 70°C for 30 minutes to provide a cured gel. This composition had excellent workability, and it had a loss coefficient (tan delta) of 0.65 at a shear frequency of 0.01 Hz and a loss coefficient of 0.70 at a shear frequency of 10 Hz. Furthermore, the gel had a consistency of 83 and a strength of 58,8 KPa (0.6 kgf/cm$^2$). The gel evidenced excellent adhesion for the substrate in contact with it during its cure. The gel was placed in an oven at 150°C in order to measure the change in consistency with elapsed time, and the result is reported in Table 1.

Comparison Example 1

The following were mixed to provide a curable organopolysiloxane gel composition: 88.2 parts by weight of a dimethylvinylsiloxy-terminated dimethylpolysiloxane with a viscosity = 2,000 mPa·s (cP) containing 4.0 weight % tetrameric to eicosameric cyclic dimethylsiloxanes; 11.8 parts by weight of a dimethylvinylsiloxy-terminated dimethylpolysiloxane with a viscosity = 10,000 mPa·s(cP) containing 5.2 weight % tetrameric to eicosameric cyclic dimethylsiloxanes; 15.3 parts by weight of an organopolysiloxane resin composed of 39.7 mole % (CH$_3$)$_3$SiO$_{1/2}$ units, 4.8 mole % (CH$_3$)$_2$(CH$_2$=CH)SiO$_{1/2}$ units, and 55.5 mole % SiO$_2$ units; 7.6 parts by weight of a dimethylhydrogensiloxy-terminated dimethylpolysiloxane with a viscosity = 16 mPa·s (cP); a chloroplatinic acid-divinyltetramethyldisiloxane complex sufficient to provide 5 ppm platinum metal based on the total quantity of dimethylpolysiloxane; and 8.2 parts by weight of dry-method silica with a specific surface = 200 m$^2$/g. The ratio of the number of moles of alkenyl groups to the number of moles of silicon-bonded hydrogen for this composition was 1:0.59). The composition was de-aerated in vacuo and heated at 70°C for 30 minutes to provide a cured gel. This composition had an excellent workability, and it had a loss coefficient (tan delta) of 0.65 at a shear frequency of 0.01 Hz and a loss coefficient of 0.70 at a shear frequency of 10 Hz. Furthermore, the gel had a consistency of 94 and a strength of 58,8 Kpa (0.6 kgf/cm$^2$). The gel evidenced excellent adhesion for the substrate in contact with it during cure. The gel was held in an oven at 150°C in order to measure the change in consistency with elapsed time, and the result is reported in Table 1.

Comparison Example 2

The following were mixed to provide a curable organopolysiloxane gel composition: 88.2 parts by weight of a dimethylvinylsiloxy-terminated dimethylpolysiloxane with a viscosity = 2,100 mPa·s (cP) and which contained 2.0 weight % tetrameric to eicosameric cyclic dimethylsiloxanes; 11.8 parts by weight of a dimethylvinylsiloxy-terminated dimethylpolysiloxane with a viscosity = 10,500 mPa·s (cP) and which contained 2.0 weight % tetrameric to eicosameric cyclic dimethylsiloxane; 15.3 parts by weight of an organopolysiloxane resin composed of 39.7 mole % (CH$_3$)$_3$SiO$_{1/2}$ units, 4.8 mole % (CH$_3$)$_2$(C$_2$=CH)SiO$_{1/2}$ units, and 55.5 moles % SiO$_2$ units; 7.6 parts by weight of a dimethylhydrogensiloxy-terminated dimethylpolysiloxane with a viscosity = 16 mPa·s (cP) a chloroplatinic acid-divinyltetramethyldisiloxane complex sufficient to provide 5 ppm platinum metal based on the total quantity of dimethylpolysiloxane; and 8.2 parts by weight of dry-method silica with a specific surface = 200 m$^2$/g. The ratio of the number of moles of alkenyl groups to the number of moles of silicon-bonded hydrogen for this composition was 1:0.59. The composition was de-aerated in vacuo and heated at 70°C for 30 minutes to provide a cured gel. This composition had an excellent workability, and it had a loss coefficient (tan delta) of 0.65 at a shear frequency of 0.01 Hz and a loss coefficient of 0.70 at a shear frequency of 10 Hz. Furthermore, the gel had a consistency of 87, and it evidenced excellent adhesion for the substrate in contact with it during cure. The gel was held in an oven at 150°C in order to measure the change in consistency with elapsed time, and the result is reported in Table 1.

Table 1

|  | present invention | Comparison Example 1 | Comparison Example 2 |
| --- | --- | --- | --- |
| initial stage (%) | 0 | 0 | 0 |
| decline after 1 day (%) | 14 | 16 | 22 |
| decline after 5 days (%) | 20 | 28 | 33 |

Because the curable organopolysiloxane gel composition according to the present invention consists of components (A) through (E), and in particular because it contains the organopolysiloxane resin (B), the diorganopolysiloxane component (C), and, as its main component, the special diorganopolysiloxane component (A), it characteristically cures to afford a gel whose gel properties undergo little change with the passage of time.

It will be apparent from the foregoing that many other variations and modifications may be made in the compounds, compositions, structures, and methods described herein without departing substantially from the essential features and concepts of the present invention. Accordingly, it should be clearly understood that the forms of the invention described herein are exemplary only and are not intended as limitations on the scope of the present invention as defined in the appended claims.

## Claims

1.  A curable organopolysiloxane gel composition comprising:

    (A) 100 parts by weight of a diorganopolysiloxane which contains at least two silicon-bonded alkenyl groups in the molecule having a viscosity at 25°C of 50 to 100,000 mPa·s (centipoise) and containing no more than 0.5 percent by weight of tetrameric to eicosameric cyclic diorganosiloxanes;
    (B) 1 to 50 parts by weight of an organopolysiloxane resin which contains silicon-bonded alkenyl groups and which is composed of the units $R^1_3SiO_{1/2}$ where $R^1$ = alkyl, $R^1_2R^2SiO_{1/2}$ where $R^1$ = alkyl and $R^2$ = $R^1$ = alkyl, $R^1_2R^2SiO_{1/2}$ where $R^1$ = alkyl and $R^2$ = alkenyl, and $SiO_2$, the ratio between the total number of moles of $R^1_3SiO_{1/2}$ units and $R^1_2R^2SiO_{1/2}$ units and the number of moles of $SiO_2$ units being within the range of 0.6:1 to 4.0:1;
    (C) an SiH-terminated diorganopolysiloxane with a viscosity of 1 to 1,000,000 mPa·s (centipoise) at 25°C wherein component (C) is added in a quantity to provide values of 1:0.2 to 1:5.0 for the ratio between the total number of moles of alkenyl groups in components (A) and (B) and the number of moles of silicon-bonded hydrogen atoms in component (C); and
    (D) a hydrosilylation reaction catalyst.

2.  The composition according to Claim 1 which includes 3-20 parts by weight of an inorganic filler per one hundred parts by weight of component (A).


## Patentansprüche

1.  Härtbare Organopolysiloxangelzusammensetzung umfassend:

    (A) 100 Gew.-Teile eines Diorganopolysiloxans, das mindestens zwei siliciumgebundene Alkenylgruppen im Molekül enthält, mit einer Viskosität von 50 bis 100.000 mPa·s (centipoise) bei 25°C, das nicht mehr als 0,5 Gew.-% von tetrameren bis eicosameren cyclischen Diorganosiloxanen enthält;
    (B) 1 bis 50 Gew.-Teile eines Organopolysiloxanharzes, das siliciumgebundene Alkenylgruppen enthält und aus $R^1_3SiO_{1/2}$-Einheiten, worin $R^1$ ein Alkylrest ist, $R^1_2R^2SiO_{1/2}$-Einheiten, worin $R^1$ ein Alkylrest ist und $R^2$ ein Alkenylrest ist, und $SiO_2$-Einheiten zusammengesetzt ist, wobei das Verhältnis der Gesamtanzahl von Molen von $R^1_3SiO_{1/2}$-Einheiten und $R^1_2R^2SiO_{1/2}$-Einheiten zu der Anzahl der Mole von $SiO_2$-Einheiten im Bereich von 0,6:1 bis 4,0:1 liegt;
    (C) ein Diorganopolysiloxan mit SiH-Endgruppen mit einer Viskosität von 1 bis 1.000.000 mPa·s (centipoise) bei 25°C, wobei Komponente (C) in einer solchen Menge zugegeben wird, daß sich Werte von 1:0,2 bis 1:5,0 ergeben für das Verhältnis der Gesamtanzahl von Molen von Alkenylgruppen in den Komponenten (A) und (B) zu der Anzahl von Molen von siliciumgebundenen Wasserstoffatomen in Komponente (C); und
    (D) einen Katalysator für die Hydrosilylierungsreaktion.

2.  Zusammensetzung nach Anspruch 1, die 3 bis 20 Gew.-Teile eines anorganischen Füllstoffs pro 100 Gew.-Teile Komponente (A) enthält.


## Revendications

1.  Une composition de gel d'organopolysiloxane durcissable comprenant :

    (A) 100 parties en poids d'un diorganopolysiloxane comptant au moins deux groupes alcényles liés au silicium par molécule, présentant une viscosité à 25°C de 50 à 100 000 mPa.s et ne renfermant pas plus de 0,5 pour cent en poids de diorganopolysiloxanes cycliques tétramères à eicosamères ;
    (B) 1 à 50 parties en poids d'une résine d'organopolysiloxane contenant des groupes alcényles liés au silicium et composée des motifs $R^1_3SiO_{1/2}$, où $R^1$ est un groupe alkyle, $R^1_2R^2SiO_{1/2}$ où $R^1$ est un groupe alkyle et $R^2$ un groupe alcényle, et $SiO_2$, le rapport entre le nombre total de moles de motifs $R^1_3SiO_{1/2}$ et de motifs $R^1_2R^2SiO_{1/2}$ et le nombre de motifs $SiO_2$ se situant dans l'intervalle de de 0,6:1 à 4,0:1

(C) un diorganopolysiloxane terminé en SiH ayant une viscosité à 25°C de 1 à 1000 000 mPa.s, le composant (C) étant introduit en une quantité propre à donner des valeurs de 1:0,2 à 1:5,0 au rapport entre le nombre total de moles de groupes alcényles présents dans les composants (A) et (B) et le nombre de moles d'atomes d'hydrogène liés au silicium présents dans le composant (C) ; et

(D) un catalyseur de réaction d'hydrosilylation.

2. La composition de la revendication 1 qui renferme 3 à 20 parties en poids d'une charge minérale pour 100 parties en poids du composant (A).